(19) **Europäisches Patentamt**
European Patent Office
Office européen des brevets

(11) **EP 4 037 038 B1**

(12) **EUROPÄISCHE PATENTSCHRIFT**

(45) Veröffentlichungstag und Bekanntmachung des Hinweises auf die Patenterteilung:
**18.06.2025 Patentblatt 2025/25**

(21) Anmeldenummer: **22152143.8**

(22) Anmeldetag: **19.01.2022**

(51) Internationale Patentklassifikation (IPC):
*H01M 4/66* (2006.01)   *H01M 10/0525* (2010.01)
*H01M 50/543* (2021.01)   *H01M 4/02* (2006.01)

(52) Gemeinsame Patentklassifikation (CPC):
**H01M 10/0525; H01M 4/663; H01M 4/667; H01M 4/668; H01M 50/543;** H01M 2004/021; H01M 2220/20

(54) **ELEKTRODE SOWIE SEKUNDÄR-BATTERIEZELLE MIT EINER SOLCHEN ELEKTRODE**

ELECTRODE AND SECONDARY BATTERY CELL WITH SUCH AN ELECTRODE

ÉLECTRODE, AINSI QUE ÉLÉMENT SECONDAIRE DE BATTERIE DOTÉ D'UNE TELLE ÉLECTRODE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2021 DE 102021200736**

(43) Veröffentlichungstag der Anmeldung:
**03.08.2022 Patentblatt 2022/31**

(73) Patentinhaber: **PowerCo SE**
**38239 Salzgitter (DE)**

(72) Erfinder:
• HÜSKER, Jessica
  38126 Braunschweig (DE)
• DIENER, Martina
  38176 Wendeburg (DE)
• YU, Zhihang
  38239 Salzgitter (DE)

(74) Vertreter: **FDST Patentanwälte**
**Nordostpark 16**
**90411 Nürnberg (DE)**

(56) Entgegenhaltungen:
US-A1- 2011 177 385   US-A1- 2019 288 352

**Beschreibung**

Die Erfindung betrifft eine Elektrode für eine Sekundär-Batteriezelle, wobei die Elektrode einen Elektrodengrundkörper mit einem Kollektorabschnitt und mit einem Kontaktabschnitt aufweist. Des Weiteren betrifft die Erfindung eine Sekundär-Batteriezelle mit einer solchen Elektrode und ein elektrisch angetriebenes Kraftfahrzeug, dessen Traktionsbatterie eine solche Sekundär-Batteriezelle aufweist.

Ein elektrisch angetriebenes Kraftfahrzeug weist typischerweise eine Traktionsbatterie (Hochvoltbatterie, HV-Batterie) auf, welche einen Elektromotor zum Antrieb des Kraftfahrzeugs mit Energie versorgt. Dabei ist unter einem elektrisch angetriebenen Kraftfahrzeug insbesondere ein Elektrofahrzeug, welches die zum Antrieb notwendige Energie lediglich in der Traktionsbatterie speichert (BEV, battery electric vehicle), ein Elektrofahrzeug mit einem Reichweitenverlängerer (REEV, range extended electric vehicle), ein Hybridfahrzeug (HEV, hybrid electric vehicle), ein Plug-In-Hybridfahrzeug (PHEV, plug-in hybrid electric vehicle) und/oder ein Brennstoffzellenfahrzeug (FCEV, fuel cell electric vehicle) zu verstehen, welches die mittels einer Brennstoffzelle erzeugte elektrische Energie in der Traktionsbatterie zwischenspeichert.

Eine solche Traktionsbatterie umfasst eine Anzahl an kurz als Batteriezellen bezeichneten Sekundär-Batteriezellen, welche beispielsweise in Batteriemodulen (Zellmodulen) zusammengefasst sind. Die Batteriezellen und gegebenenfalls die Batteriemodule sind dabei miteinander in Serie und/oder parallel zueinander geschaltet, so dass die Traktionsbatterie eine ausreichend hohe Stromstärke und eine ausreichend hohe Spannung für einen zum Antreiben des Kraftfahrzeugs vorgesehenen Elektromotor bereitstellen kann. Typischerweise sind die Traktionsbatterie als Lithium-Ionen-Batterie und deren Sekundär-Batteriezellen als Lithium-Ionen-Batteriezellen ausgebildet.

Jede der Batteriezellen umfasst zumindest eine Anode und zumindest eine Kathode. Diese Elektroden sind jeweils mittels einer Trägerfolie, welche typischerweise eine Metallfolie ist, gebildet, wobei die Trägerfolie in einem sogenannten Kollektorabschnitt mit einem Aktivmaterial beschichtet ist. Weiterhin umfasst die Trägerfolie einen unbeschichteten und als Ableiterfähnchen bezeichneten Kontaktabschnitt, anhand dessen die Elektrode elektrisch mit einem Zellableiter (Tab) verbunden werden kann.

Für einen möglichst großen Komfort eines Nutzers ist es wünschenswert, dass ein entsprechender Ladevorgang der Traktionsbatterie bzw. dessen Batteriezellen möglichst schnell erfolgen kann. Beim Laden fließt der Strom über die Ableiterfähnchen in den Kollektorabschnitt. Eine maximal realisierbare Ladegeschwindigkeit (Laderate) des Ladevorgangs ist hierbei aufgrund einer Wärmeentwicklung und/oder aufgrund des ohmschen Widerstandes der Batteriezellen, insbesondere des Ableiterfähnchens und des Kollektorabschnitts, zu begrenzen, um eine Beschädigung der Traktionsbatterie und deren Batteriezellen zu vermeiden.

In der US 2011/177385 A1 ist ein Stromkollektor mit einem Kernbereich offenbart. Der Kernbereich enthält mindestens ein elektrisch leitfähiges drittes Material. Der Stromkollektor weist außerdem einen ersten Oberflächenbereich auf, der mindestens ein erstes Material umfasst. Der Stromkollektor weist außerdem einen zweiten Oberflächenbereich auf, der mindestens ein zweites Material umfasst. Dabei ist die elektrische Leitfähigkeit des ersten Oberflächenbereichs geringer als die des zweiten Oberflächenbereichs.

In der US 2019/288352 A1 ist eine Batterie beschrieben, die ein Gehäuse umfasst, das eine elektrochemische Zone definiert. Die Batterie umfasst weiterhin mindestens eine Elektrode, die ein leitfähiges Substrat umfasst, wobei das Substrat einen ersten Bereich in der elektrochemischen Zone und einen zweiten Bereich umfasst, der aus der elektrochemischen Zone herausragt.

Der Erfindung liegt die Aufgabe zugrunde, eine besonders geeignete Elektrode für eine Sekundärbatteriezelle, beispielsweise für eine Lithium-Ionen-Batteriezelle, anzugeben. Insbesondere soll anhand dieser ein möglichst schneller Ladevorgang ermöglicht sein. Des Weiteren soll eine solche Sekundär-Batteriezelle sowie ein elektrisch angetriebenes Kraftfahrzeug angegeben werden, dessen Traktionsbatterie zumindest eine solche Sekundär Batteriezelle umfasst.

Bezüglich der Elektrode wird die Aufgabe erfindungsgemäß gelöst durch die Merkmale des Anspruchs 1. Hinsichtlich der Sekundär-Batteriezelle wird die Aufgabe mit den Merkmalen des Anspruchs 9 und bezüglich des elektrisch angetriebenen Kraftfahrzeugs mit den Merkmalen des Anspruchs 10 erfindungsgemäß gelöst. Vorteilhafte Ausgestaltungen und Weiterbildungen sind Gegenstand der Unteransprüche. Dabei gelten die Ausführungen im Zusammenhang mit der Elektrode sinngemäß auch für die Sekundär-Batteriezelle sowie für das elektrisch angetriebene Kraftfahrzeug und umgekehrt.

Hierzu weist die Elektrode einen Elektrodengrundkörper auf, welcher wiederum einen Kollektorabschnitt sowie einen Kontaktabschnitt aufweist. Dabei dient der Kollektorabschnitt als Stromkollektor. Der Kontaktabschnitt ist zum elektrischen Kontaktieren mit einem auch als Tab bezeichneten Zellableiter einer die Elektrode aufweisenden Batteriezelle vorgesehen und eingerichtet, wobei anhand des Zellableiters elektrischer Strom zur Elektrode oder von der Elektrode geleitet werden kann. Bei manchen Ausgestaltungen von Batteriezellen, beispielsweise bei einer zylindrischen oder bei einer prismatischen Batteriezelle, ist es vorgesehen, dass der Kontaktabschnitt mit einem Gehäuseteil der die Elektrode aufweisenden Batteriezelle elektrisch kontaktiert wird. In diesem Fall ist der Kontaktabschnitt dazu vorgesehen und eingerichtet, mit dem Gehäuseteil elektrisch kontaktiert zu werden.

Der Elektrodengrundkörper ist vorzugsweise folienartig, und insbesondere blatt- oder bandförmig, ausgebildet. Beispielsweise ist der Elektrodengrundkörper anhand einer Folie oder anhand mehrerer Folien gebildet. In diesem Fall wird der Elektrodengrundkörper auch als Trägerfolie(n) bezeichnet. Alternativ oder zusätzlich ist der Kontaktabschnitt und/oder der Kollektorabschnitt jeweils anhand eines, vorzugsweise gewebten oder gesponnen, Netzes, anhand einer porösen Struktur gebildet. Zusätzlich oder alternativ ist der ist der Kontaktabschnitt und/oder der Kollektorabschnitt mit Aussparungen oder, beispielsweise gestanzten, Löchern versehen.

Der Kollektorabschnitt ist dabei entweder einteilig (monolithisch), also zusammenhängend, mit dem Kontaktabschnitt ausgebildet, oder alternativ hierzu sind der Kollektorabschnitt und der Kontaktabschnitt zueinander separate Bestandteile des Elektrodengrundkörpers, welche miteinander gefügt und zweckmäßiger Weise miteinander elektrisch verbunden sind. Zweckmäßigerweise ist der Kontaktabschnitt randseitig des Kollektorabschnitts angeordnet und/oder ragt über den Kollektorabschnitt in einer vom diesem aufgespannten Fläche seitlich hinaus.

Der Kollektorabschnitt und der Kontaktabschnitt weisen unterschiedliche elektrische Leitfähigkeiten und/oder unterschiedliche thermische Leitfähigkeiten auf. Mit anderen Worten ist die thermische Leitfähigkeit des Kollektorabschnitts unterschiedlich zur thermischen Leitfähigkeit des Kontaktabschnitts, und/oder die elektrische Leitfähigkeit des Kollektorabschnitts ist unterschiedlich zur thermischen Leitfähigkeit des Kontaktabschnitts. Insbesondere ist der Betrag der elektrischen Leitfähigkeit und/oder der Betrag der thermischen Leitfähigkeit des Kontaktabschnitts ungleich zum Betrag der elektrischen Leitfähigkeit bzw. der thermischen Leitfähigkeit des Kollektorabschnitts.

Insbesondere im Vergleich zu Elektroden, deren Elektrodengrundkörper aus einer einzigen zusammenhängenden Folie gebildet ist, sind anhand der erfindungsgemäßen Elektrode in besonders vorteilhafter Weise die elektrische und/oder thermische Leitfähigkeit des Kontaktabschnitts und des Kollektorabschnitts entsprechend unterschiedlicher Anforderungen an die elektrische und/oder thermische Leitfähigkeiten dieser Abschnitte wählbar und zweckmäßigerweise auch so gewählt und ausgeführt. Somit sind lokal unterschiedliche Anforderungen besser erfüllbar. Beispielsweise ist die elektrische und die thermische Leitfähigkeit des Kontaktabschnitts größer als die elektrische und thermische Leitfähigkeit des Kollektorabschnitts, so dass ein Abtransport von Wärme über die Kontaktabschnitte verbessert ist und/oder ein höherer Lade- oder Entladestrom realisiert werden kann.

Die Elektrode ist geeigneter Weise für eine Sekundär-Batteriezelle, beispielsweise für einen Lithium-Ionen-Batteriezelle, vorgesehen.

Zum Zweck einer unterschiedlichen Ausgestaltung des Kollektorabschnitts und des Kontaktabschnitts hinsichtlich deren elektrischen und/oder thermischen Leitfähigkeit weisen der Kollektorabschnitt und der Kontaktabschnitt unterschiedliche Dicken auf. Mit anderen Worten ist die räumliche Ausdehnung des Kontaktabschnitts senkrecht zu einer vom Elektrodengrundkörper aufgespannten Ebene unterschiedlich, also größer oder kleiner, zur räumlichen Ausdehnung des Kollektorabschnitts in dieser Richtung. Der Elektrodengrundkörper ist als eine einzige Metallfolie gebildet, wobei im Zuge dessen Herstellung der Kontaktabschnitt unter kleinerem Druck gewalzt wurde als der Kollektorabschnitt.

Alternativ hierzu sind gemäß einer zweckmäßigen Ausgestaltung für die unterschiedlichen Ausgestaltung des Kollektorabschnitts und des Kontaktabschnitts hinsichtlich deren elektrischen und/oder thermischen Leitfähigkeit der Kollektorabschnitt und der Kontaktabschnitt aus unterschiedlichen Materialien gebildet. Insbesondere ist also der Kontaktabschnitt aus einem ersten Material und der Kollektorabschnitt aus einem zweiten Material gebildet, wobei das erste Material und das zweite Material unterschiedlich sind, und wobei die elektrische und/oder thermische Leitfähigkeit des ersten Materials unterschiedlich zur elektrischen und/oder thermischen Leitfähigkeit des zweiten Materials ist.

Gemäß einer zweckmäßigen Ausgestaltung ist der Kollektorabschnitt aus einer Polymerfolie gebildet, welche mit einem Metall beschichtet ist. Alternativ hierzu ist der Kollektorabschnitt aus einer Kohlenstofffolie gebildet, welche mit dem Metall beschichtet ist. Der Kontaktabschnitt ist dabei beispielsweise anhand einer Metallfolie gebildet. Vorteilhaft ist das Gewicht einer mit Metall beschichteten Polymer- oder Kohlenstofffolie geringer als das Gewicht einer gleich großen Metallfolie. Infolge dessen ist auch das Gewicht der gesamten Elektrode verringert und die gravimetrische Energiedichte einer die Elektrode umfassenden Batteriezelle erhöht.

Zusätzlich oder alternativ hierzu unterscheiden sich der Kollektorabschnitt und der Kontaktabschnitt in anderen physikalischen Eigenschaften, beispielsweise deren Oberflächenstruktur deren Rauigkeit und/oder deren Porosität. Vorteilhaft ist es anhand unterschiedlicher Oberflächenstrukturen ermöglicht, dass die Oberflächenstruktur des Kollektorabschnitts für eine vergleichsweise zuverlässige Haftung der Beschichtung aus Aktivmaterial vorgesehen und eingerichtet ist, wobei die Oberflächenstruktur des Kontaktabschnitts für eine vergleichsweise zuverlässige elektrische und/oder mechanische Kontaktierung mit dem Tab bzw. mit dem Gehäuse vorgesehen und eingerichtet ist.

Gemäß einer zweckmäßigen Ausgestaltung ist der Kollektorabschnitt mit einem Aktivmaterial beschichtet. Vorzugsweise ist der Kollektorabschnitt beidseitig mit dem Aktivmaterial beschichtet. Sofern die Elektrode als Anode vorgesehen ist, bildet beispielsweise eine Kupferfolie den Kollektorabschnitt, wobei als (Anoden-)Aktivmaterial Graphit, Graphen, Lithium- Titanat (LTO), oder sogenannte Hard Carbon, Soft Carbon, und/oder Carbon-Nanotubes verwendet werden. Alternativ ist der Kollektorabschnitt mit Silizium, mit einem Silizium-basierten Anodenmaterial, mit Lithium als Aktivmaterial versehen. Alternativ oder zusätzlich ist die Anode mit einem anderen aus dem Stand der Technik als Aktivmaterial für eine Anode bekanntem Material versehen. Sofern die Elektrode als Kathode vorgesehen ist, bildet beispielsweise eine Aluminiumfolie den Kollektorabschnitt, wobei als Aktivmaterial ein Lithium-Nickel-Cobalt-Aluminium-Oxid (NCA), ein Lithium-Eisen-Phosphat (LFP), ein Lithium-Nickel-Mangan-Cobalt-Oxid (NMC), Schwefel, eine Schwefelverbindung, Lithiummanganoxid (LMO), Lithium-Mangan-Nickeloxid (LMNO), Lithium-Cobalt-Oxid (LCO), $LiFeSO_4F$, $LiTiS_2$ oder ein anderes aus dem Stand der Technik als Aktivmaterial für eine Kathode bekanntes Material verwendet werden kann. Zweckmäßiger Weise umfasst die Schicht mit Aktivmaterial weiterhin einen Binder sowie ein Leitmittel und/oder weitere Leitadditive, wie z.B. Leitruß, Graphen, Carbon Nanotubes oder Carbon Nanofibers.

Insbesondere sofern die Elektrode für die Verwendung in einer Feststoffbatteriezelle (Festkörperbatteriezelle) vorgesehen ist, ist der Elektrodenabschnitt alternativ hierzu nicht mit Aktivmaterial beschichtet. Das Lithium scheidet sich im Betrieb der Feststoffbatteriezelle dann direkt auf dem Kollektorabschnitt ab. Beispielsweise weist der Kollektorabschnitt hierbei eine Oberflächenstruktur auf, welche ein solches Abscheiden begünstigt. Beispielsweise dient die Oberflächenstruktur einer Vergrößerung der Oberfläche des Kollektorabschnitts.

Gemäß einer vorteilhaften Weiterbildung weist der Kollektorabschnitt einen ersten Bereich und einen zweiten Bereich auf, wobei der erste Bereich und der zweite Bereich hinsichtlich deren elektrischer und/oder thermischer Leitfähigkeit unterschiedlich sind. Die beiden Bereiche sind dabei zweckmäßiger Weise in der vom Kollektorabschnitt aufgespannten Ebene nebeneinander angeordnet. Die beiden Bereiche weisen beispielsweise zueinander unterschiedliche Dicken, also räumliche Ausdehnungen in einer Richtung senkrecht zur Ebene, welche vom Kollektorabschnitt aufgespannt ist, und/oder unterschiedliche Materialien auf. Beispielsweise umfasst der erste Bereich rahmenartig den zweiten Bereich oder ist umfangsseitig am zweiten Bereich angeordnet. Auf diese Weise ist es ermöglicht, die thermischen und elektrischen Leiteigenschaften des Kollektorabschnitts weiter einzustellen oder anzupassen. Beispielsweise weist der erste Bereich eine höhere thermische und elektrische Leitfähigkeit auf als der zweite Bereich, wobei der erste Bereich an den Kontaktabschnitt angrenzt, so dass ein vergleichsweise guter Wärmeabtransport von der Elektrode realisiert ist. Beispielsweise ist hierzu der erste Bereich anhand einer mit Aktivmaterial beschichteten Metallfolie ausgebildet, wobei die Metallfolie im zweiten Bereich dünner ausgestaltet ist.

Gemäß einer vorteilhaften Ausgestaltung weist der Elektrodengrundkörper mehre Kontaktabschnitte, also mehr als einen Kontaktabschnitt auf. Mit anderen Worten weist der Elektrodengrundkörper den Kontaktabschnitt und weitere Kontaktabschnitte auf. Insbesondere sind die Kontaktabschnitte hierbei an einer gemeinsamen Kante oder Seite des Kollektorabschnitts angeordnet. Die Kontaktabschnitte sind dabei beispielsweise gleich zueinander ausgebildet. Alternativ jedoch können sich die Kontaktabschnitte zueinander in der elektrischen und/oder thermischen Leitfähigkeiten unterscheiden. Hierzu weisen diese beispielsweise unterschiedliche Dicken auf und/oder sind aus unterschiedlichen Materialien gebildet.

Insbesondere sofern die Elektrode für die Bildung eines Elektrodenwickels vorgesehen ist, weist diese eine Bandform, also eine längliche Form auf. Vorzugsweise sind die Kontaktabschnitte dann zueinander gleichmäßig oder ungleichmäßig beabstandet an der (vergleichsweise langen) Längsseite des Kollektorabschnitts angeordnet. Aufgrund der Verwendung mehrerer Kontaktabschnitte an einer Kante des Kollektorabschnitts ist der Gesamtwiderstand der Elektrode vorteilhaft verringert.

Alternativ hierzu erstreckt sich der Kontaktabschnitt gemäß einer vorteilhaften Ausgestaltung entlang der gesamten Breite oder entlang der gesamten Länge des Kollektorabschnitts. Im Vergleich zu Elektroden, bei denen sich der Kontaktabschnitt lediglich entlang eines einem vergleichsweise kleinen Teils der Länge oder der Breite erstreckt, ist ein durchschnittlicher Weg eines Elektrons vom Kollektorabschnitt zum Kontaktabschnitt und damit einhergehend auch der elektrische Widerstand der Elektrode reduziert.

Ein weiterer Aspekt der Erfindung betrifft eine (Sekundär) Batteriezelle, welche eine Elektrode in einer der oben dargestellten Varianten aufweist. Die Batteriezelle ist beispielsweise als Lithium-Ionen-Batteriezelle ausgebildet und kann dabei sowohl als eine Pouchzelle, als eine Rundzelle oder als eine prismatische Zelle ausgebildet sein.

Vorzugsweise sind jede der Elektroden der Batteriezelle, also alle deren Anoden und alle deren Kathoden in einer der oben dargestellten Varianten ausgebildet. Insbesondere weist jede der Elektroden der Batteriezelle einen Kollektorabschnitt und einen Kontaktabschnitt auf, wobei der Kollektorabschnitt und der Kontaktabschnitt unterschiedliche elektrische Leitfähigkeiten und/oder unterschiedliche thermische Leitfähigkeiten aufweisen.

Weiterhin können die Elektrodengrundkörper der Kathoden zueinander unterschiedlich sein. Zusätzlich oder alternativ könnend die Elektrodengrundkörper der Anoden zueinander unterschiedlich sein. Beispielsweise weist die Batteriezelle herkömmliche Elektroden zusätzlich zu der Elektrode bzw. zu den Elektroden in einer der oben beschriebenen Varianten auf.

Ein weiterer Aspekt der Erfindung betrifft ein elektrisch angetriebenes Kraftfahrzeug mit einer Traktionsbatterie. Diese weist mindestens eine (Sekundär) Batteriezelle in einer der oben dargestellten Varianten auf.

Nachfolgend werden Ausführungsbeispiele der Erfindung anhand einer Zeichnung näher erläutert. Darin zeigen:

Fig. 1 schematisch ein elektrisch angetriebenes Kraftfahrzeug, dessen Traktionsbatterie (Batteriesystem) eine Anzahl an Batteriemodulen aufweist, wobei die Batteriemodule wiederum eine Anzahl an als Lithium-Ionen-Batteriezellen ausgebildete Sekundär-Batteriezellen umfassen,

Fig. 2a schematisch eine erste Variante der Elektrode einer der Batteriezellen in Draufsicht, wobei die Elektrode einen Elektrodengrundkörper mit einem Kontaktabschnitt sowie mit einem mit Aktivmaterial beschichteten Kollektorabschnitt aufweist,

Fig. 2b schematisch in Seitenansicht die Elektrode gemäß der Fig. 2a, wobei der Kontaktabschnitt eine größere Dicke aufweist als der Kollektorabschnitt,

Fig. 2c schematisch in Seitenansicht die Elektrode gemäß einer alternativen Ausgestaltung der ersten Variante, wobei der Kontaktabschnitt eine kleinere Dicke aufweist als der Kollektorabschnitt,

Fig. 3a schematisch in Seitenansicht eine zweite Variante der Elektrode, wobei deren Kollektorabschnitt anhand einer Polymer- oder Kohlenstofffolie gebildet ist, welche mit einer Metallschicht versehen ist,

Fig. 3b schematisch in Draufsicht eine alternative Ausgestaltung der zweiten Variante der Elektrode, bei der der Kollektorabschnitt einen ersten Bereich, welcher anhand einer Metallfolie gebildet ist, und einen zweiten Bereich aufweist, welcher anhand einer mit einer Metallschicht versehenen Polymer- oder Kohlenstofffolie gebildet ist,

Fig. 3c schematisch einen Querschnitt der Elektrode der alternativen Ausgestaltung der zweiten Variante mit der in der Fig. 3b gezeigten Schnittebene IIIc,

Fig. 4 schematisch in Draufsicht eine dritte Variante der Elektrode, bei welcher sich der Kontaktabschnitt entlang der gesamten Breite des Kollektorabschnitts erstreckt, und

Fig. 5 schematisch in Draufsicht eine vierte Variante der Elektrode, wobei die Elektrode bandförmig ausgebildet ist, und wobei die Elektrode mehrere Kontaktabschnitte an deren Längsseite aufweist.

Einander entsprechende Teile und Größen sind in allen Figuren stets mit gleichen Bezugszeichen versehen.

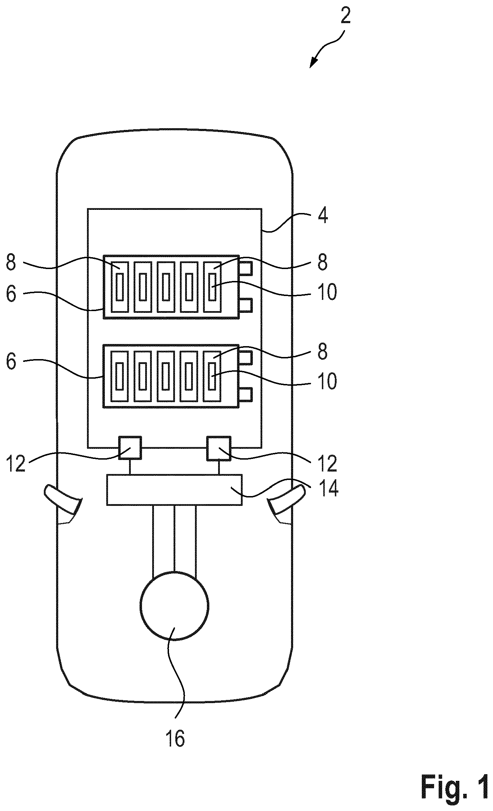

In Fig. 1 ist ein Kraftfahrzeug 2 mit einer Traktionsbatterie 4 dargestellt. Die Traktionsbatterie 4 weist eine Anzahl an auch als Zellmodule bezeichneten Batteriemodulen 6 auf, wobei zum Zweck einer besseren Übersichtlichkeit lediglich zwei der Batteriemodule 6 dargestellt sind.

Jedes der Batteriemodule 6 weist wiederum eine Anzahl als Lithium-Ionen-Batteriezellen ausgebildete Sekundär-Batteriezellen 8 auf, von denen je Batteriemodul 6 jeweils fünf dargestellt sind. Die Batteriezellen 8 sind in der Fig. 1 beispielhaft als Pouchzellen ausgebildet, wobei die Batteriezellen 8 mittels deren Zellableiter 10 elektrisch miteinander verschaltet sind. Insbesondere sind die Batteriezellen 8 jedes Batteriemoduls 6 sind in nicht näher dargestellter Weise anhand deren Zellableiter 10 in Serie und/oder parallel zueinander verschaltet. Zudem sind die Batteriemodule 6 in nicht näher dargestellter Weise in Serie und/oder parallel zueinander verschaltet sowie mit Batterieanschlüssen 12 für einen Verbraucher elektrisch verbunden.

An den Batterieanschlüssen 12 der Traktionsbatterie 4 ist ein Verbraucher angeschlossen, welcher hier als ein Wechselrichter 14 eines Antriebstrangs des Kraftfahrzeugs 2 und ein an diesen angeschlossener Elektromotor 16 ausgebildet ist. Der Wechselrichter 14 wandelt den von der Traktionsbatterie 4 bereitgestellten Gleichstrom bzw. die von dieser bereitgestellte Gleichspannung in einen zum Betrieb des Elektromotors 16 geeigneten Wechselstrom bzw. in eine Wechselspannung. Zusammenfassend stellt die Traktionsbatterie elektrische Energie für einen Antrieb des Kraftfahrzeugs 2 bereit.

In nicht weiter dargestellten Alternativen sind die Batteriezellen 8 als Rundzelle oder als prismatische Zellen ausgebildet.

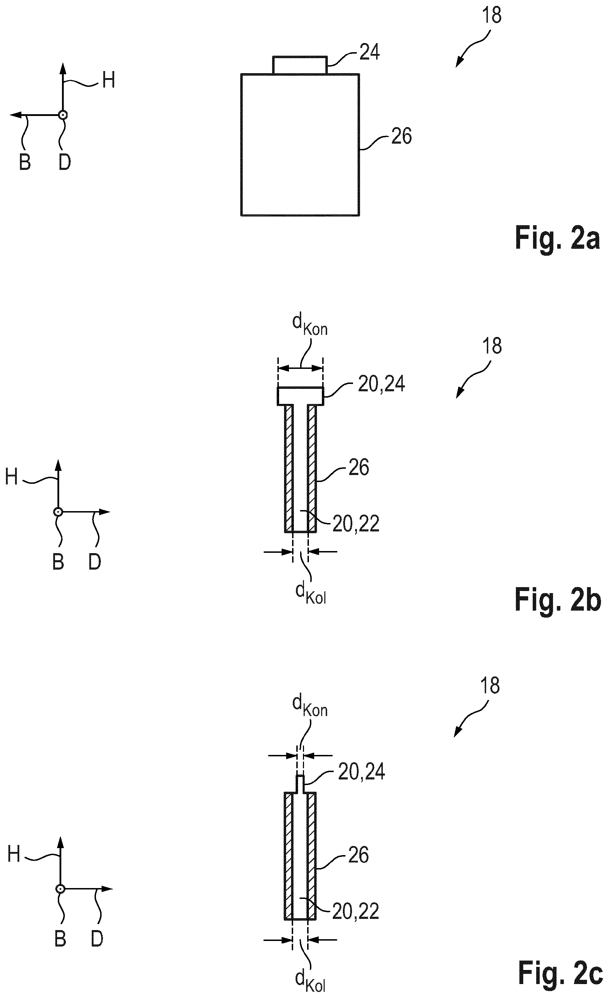

In der Fig. 2a ist eine erste Variante einer Elektrode 18 einer der Batteriezellen 8 dargestellt. Die Elektrode 18 umfasst einen folienartigen Elektrodengrundkörper 20, welcher anhand eines Kollektorabschnitts 22 als Stromkollektor und anhand eines Kontaktabschnitts 24 gebildet ist. Der Kontaktabschnitt 24 dient dabei zur elektrischen Kontaktierung der Elektrode 18 mit dem Zellableiter 10 innerhalb der Batteriezelle 8, wobei der Zellableiter 10 nach Batteriezellenaußen geführt ist, um dort verschaltet zu werden.

Der Elektrodengrundkörper 20 ist in dieser ersten Variante als eine (einzige) Metallfolie ausgebildet. Somit sind der Kontaktabschnitt 24 und der Kollektorabschnitt 22 monolithisch, also zusammenhängend, ausgebildet. Die Elektrode 18 weist weiterhin Aktivmaterial auf, mit welchem der Kollektorabschnitt 22 beidseitig beschichtet ist. Diese Beschichtung aus Aktivmaterial ist mit dem Bezugszeichen 26 versehen.

Der Elektrodengrundkörper 20 spannt eine Ebene auf, wobei die Haupterstreckungsrichtungen im Nebenstehenden Richtungsdiagramm mit B (für die Breitenrichtung) und H (für die Hochrichtung) bezeichnet sind. Die Richtung senkrecht zu dieser Ebene ist mit dem Bezugszeichen D (für die Dickenrichtung) versehen. Diese Richtungsangaben gelten in analoger Weise für die Ausführungen der Figuren 2b bis 4.

Wie in der Fig. 2b erkennbar ist, weist der Kollektorabschnitt 22 eine Dicke $d_{Kol}$ und der Kontaktabschnitt eine Dicke $d_{Kon}$ auf, wobei die Dicke $d_{Kon}$ des Kontaktabschnitts 24 größer ist als die Dicke $d_{Kol}$ des Kollektorabschnitts 22. Mit anderen Worten ist die räumliche Ausdehnung des Kontaktabschnitts 24 in der Richtung D größer als die räumliche Ausdehnung des Kollektorabschnitts 22 in dieser Richtung.

In der Fig. 2c ist eine alternative Ausgestaltung der Elektrode der ersten Variante dargestellt. Diese alternative Ausgestaltung unterscheidet sich zur ersten Variante lediglich darin, dass die Dicke $d_{Kol}$ des Kollektorabschnitts 22 größer ist als die Dicke $d_{Kon}$ des Kontaktabschnitts 24.

In nicht weiter dargestellten Varianten der Elektroden 18 gemäß den Figuren 2a bis 2c ist der Kollektorabschnitt 22 nicht mit Aktivmaterial versehen. Bei Betrieb der Batteriezelle scheidet sich dann das Lithium an der Oberfläche des Kollektorabschnitts 22 ab.

Zusammenfassend weisen der Kontaktabschnitt 24 und der Kollektorabschnitt 22 gemäß der ersten Variante und gemäß der alternativen Ausgestaltung der ersten Variante unterschiedliche Dicken und somit unterschiedliche thermische und elektrische Leitfähigkeiten auf.

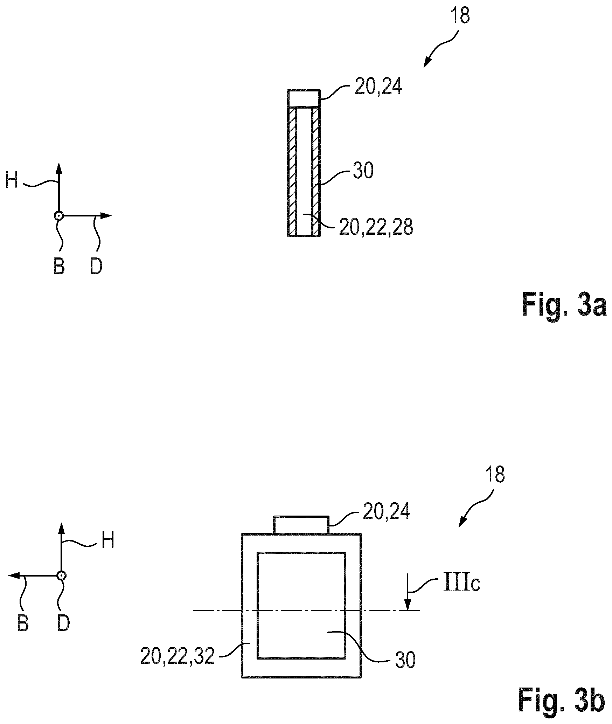

In der Fig. 3a ist eine zweite Variante der Elektrode 18 gezeigt. Bei der zweiten Variante sind der Kollektorabschnitt 22 und der Kontaktabschnitt 24 miteinander gefügt. Diese sind also nicht monolithisch miteinander verbunden. Dabei ist der Kontaktabschnitt 24 randseitig, hier an einer sich in Richtung B erstreckenden Kante des Kollektorabschnitts 22, angeordnet. Der Kontaktabschnitt 24 ist dabei vorzugsweise als eine Metallfolie als erstes Material M1 ausgebildet. Der Kollektorabschnitt ist mittels einer Polymer- oder Kohlenstofffolie 28 als zweites Material M2 gebildet. Diese ist mit einer Metallschicht 30 versehen. Dabei ist die Metallschicht 30 mit dem Kontaktabschnitt 24 elektrisch verbunden. Zusammenfassend das Material M1 des Kontaktabschnitts 24 unterschiedlich zum Material M2 des Kollektorabschnitt 22.

Gemäß einer nicht weiter dargestellten Alternative sind der Kollektorabschnitt 24 und der Kontaktabschnitt 24 aus Folien unterschiedlicher Materialien, insbesondere anhand unterschiedlicher Metallfolien, gebildet, wobei der Kollektorabschnitt 24 und der Kontaktabschnitt 24 miteinander gefügt sind. Beispielsweise ist dabei der Kollektorabschnitt 24 mit Aktivmaterial beschichtet.

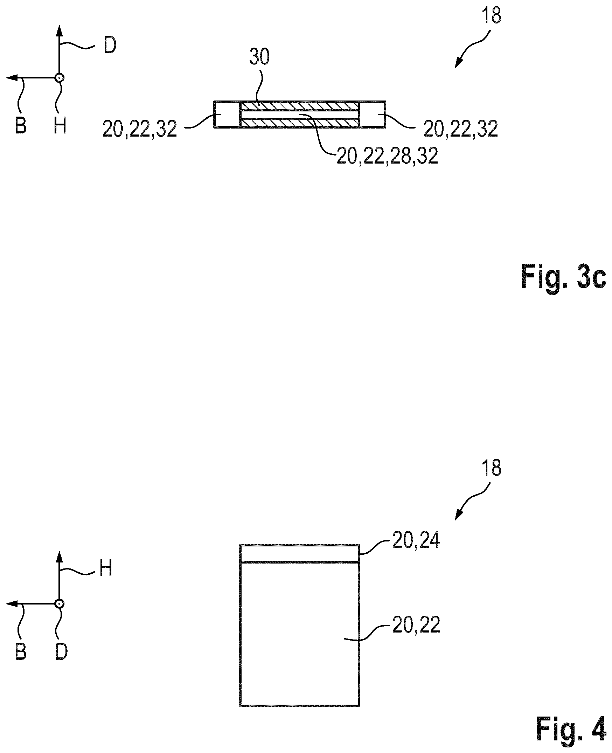

In den Figuren 3b und 3c ist eine alternative Ausgestaltung der zweiten Variante der Elektrode 18 gezeigt. Hierbei weist der Kollektorabschnitt 22 zwei Bereiche 32 und 34 auf. Der erste Bereich 32 ist dabei anhand einer Metallfolie gebildet und mit dem Kontaktabschnitt 24 elektrisch verbunden. Beispielsweise sind der erste Bereich 32 und der Kontaktabschnitt einteilig, mit anderen Worten monolithisch ausgebildet. Der zweite Bereich 34 des Kollektorabschnitts 22 ist anhand einer Polymer- oder Kohlenstofffolie 28 gebildet, die beidseitig mit einer Metallschicht 30 versehen ist. Beispielhaft umfasst der erste Bereich 32 den zweiten Bereich 34 rahmenartig. Alternativ ist der erste Bereich 32 bandförmig ausgestaltet, welcher zwischen dem zweiten Bereich 34 und dem Kontaktabschnitt 24 entlang der dem Kontaktabschnitt 24 zugewandten Kante des Kollektorabschnitts 22 erstreckt.

Zusammenfassend sind der erste Bereich 32 und der zweite Bereich 34 somit hinsichtlich deren elektrischer und/oder thermischer Leitfähigkeit unterschiedlich.

In der Fig. 4 ist eine dritte Variante der Elektrode 18 dargestellt. Bei dieser erstreckt sich der Kontaktabschnitt 24 entlang der gesamten Breite des Kollektorabschnitts 22, also entlang der vollständigen Ausdehnung des Kollektorabschnitts 22 in Richtung B. Dabei ist weist der Kollektorabschnitt 22 in analoger Weise zu den Darstellungen zu den Figuren 2a bis 2c eine andere Dicke $d_{Kol}$ auf als der Kontaktabschnitt 24, und/oder der Kontaktabschnitt 24 ist in analoger Weise zu den Darstellungen zu den Figuren 3a bis 3c aus einem anderen Material gebildet wie der Kollektorabschnitt 22.

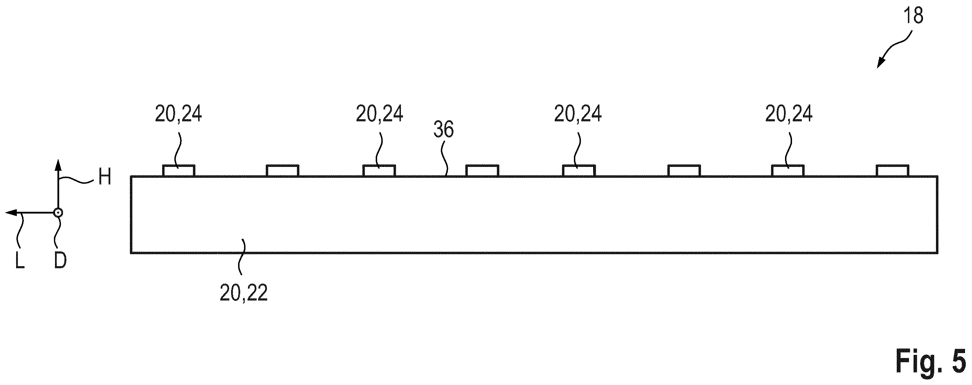

In der Fig. 5 ist eine weitere, vierte Variante der Elektrode 18 gezeigt. Diese ist bandförmig ausgebildet. Die Elektrode spannt also eine Ebene auf, wobei die Haupterstreckungsrichtungen der Elektrode 18 die Längsrichtung L und die Hochrichtung H bilden. Zudem ist die Ausdehnung der Elektrode 18 in Längsrichtung L vergleichsweise groß zur Ausdehnung in Hochrichtung H. Eine solche bandförmige Elektrode 18 ist beispielsweise für die Bildung eines Elektrodenwickels (jelly roll) oder eines Flachwickels vorgesehen, welche typischerweise in Rundzellen oder in prismatischen Zellen verwendet werden.

Der Elektrodengrundkörper 20 weist den Kollektorabschnitt 22 sowie mehrere Kontaktabschnitte 24 auf. Diese sind hier beispielhaft an einer gemeinsamen, sich in Längsrichtung L erstreckenden Längsseite 36 des Kollektorabschnitts 22 angeordnet. Beispielsweise sind die Kontaktabschnitte zueinander gleich ausgestaltet. Jedoch ist es auch möglich, dass die Kontaktabschnitte zueinander unterschiedliche Dicken und/oder zueinander unterschiedliche Ausdehnungen in Längsrichtung aufweisen, und/oder aus unterschiedlichen Materialien gebildet sind. Der Kollektorabschnitt ist beispielsweise aus einer mit Aktivmaterial versehenen Metallfolie oder aus einer mit einer Metallschicht versehenen Polymer- oder Kohlenstofffolie gebildet.

Allenfalls weist zumindest einer der Kontaktabschnitte 24 eine andere Dicke $d_{Kon}$ auf als der Kollektorabschnitt 22 und/oder ist aus einem anderen Material gebildet als der Kollektorabschnitt 22.

Zusammenfassend ist bei allen oben dargestellten Varianten und Ausgestaltungen die elektrische Leitfähigkeit $\sigma_{Kol}$ des Kollektorabschnitts 22 und/oder die thermische Leitfähigkeit $\lambda_{Kol}$ des Kollektorabschnitts 22 unterschiedlich zur elektrischen Leitfähigkeit $\sigma_{Kon}$ es Kontaktabschnitts 24 bzw. zur thermischen Leitfähigkeit $\lambda_{Kon}$ des Kontaktabschnitts. Mit anderen Worten gilt:

$$\sigma_{Kol} \neq \sigma_{Kon},$$

und/oder

$$\lambda_{Kol} \neq \lambda_{Kon}.$$

Auf diese Weise ist es vorteilhaft ermöglicht, dass die elektrischen Leitfähigkeiten und/oder die thermischen Leitfähigkeiten des Kollektorabschnitts 22 und des Kontaktabschnitts 24 unabhängig voneinander an eine jeweilige Anforderung an die Batteriezelle bzw. deren Elektroden, insbesondere an unterschiedliche Anforderungen an den Kollektorabschnitt 22 und an den Kontaktabschnitt 24 hinsichtlich deren thermischen und/oder deren elektrischen Leitfähigkeiten, angepasst sind.

Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

Bezugszeichenliste

2 elektrisch angetriebenes Kraftfahrzeug
4 Traktionsbatterie
6 Batteriemodul
8 Lithium-Ionen-Batteriezelle
10 Zellableiter
12 Batterieanschluss
14 Wechselrichter
16 Elektromotor
18 Elektrode
20 Elektrodengrundkörper
22 Kollektorabschnitt
24 Kontaktabschnitt
26 Beschichtung aus Aktivmaterial
28 Polymer- oder Kohlenstofffolie

30 Metallschicht
32 erster Bereich des Kollektorabschnitts
34 zweiter Bereich des Kollektorabschnitts
36 Längsseite

B Breitenrichtung
D Dickenrichtung
H Hochrichtung
L Längsrichtung
$d_{Kol}$ Dicke des Kollektorabschnitts
$d_{Kon}$ Dicke des Kontaktabschnitts

**Patentansprüche**

1. Elektrode (18) für eine Sekundär-Batteriezelle (8) mit einem, insbesondere folienartigen, Elektrodengrundkörper (20),

  - wobei der Elektrodengrundkörper (20) einen Kollektorabschnitt (22) als Stromkollektor sowie einen Kontaktabschnitt (24) zum elektrischen Kontaktieren mit einem Zellableiter (ZA) aufweist, und
  - wobei der Kollektorabschnitt (22) und der Kontaktabschnitt (24) unterschiedliche elektrische Leitfähigkeiten und/oder unterschiedliche thermische Leitfähigkeiten aufweisen,
  **dadurch gekennzeichnet,**
  - **dass** der Elektrodengrundkörper (20) aus einer Metallfolie gebildet ist, wobei der Kollektorabschnitt (22) und der Kontaktabschnitt (24) des Elektrodengrundkörpers (20) unterschiedliche Dicken ($d_{Kol}$, $d_{Kon}$) aufweisen, oder
  - **dass** der Kollektorabschnitt (22) aus einem ersten Material und der Kontaktabschnitt (24) aus einem zum ersten Material unterschiedlichen zweiten Material gebildet ist.

2. Elektrode (18) nach Anspruch 1,
**dadurch gekennzeichnet,**
**dass** der Kollektorabschnitt (22) mit Aktivmaterial beschichtet ist.

3. Elektrode (18) nach Anspruch 1 oder 2,
**dadurch gekennzeichnet,**
**dass** der Kollektorabschnitt (22) aus einer Polymerfolie oder aus einer Kohlenstofffolie gebildet ist, wobei die Polymerfolie oder die Kohlenstofffolie mit einem Metall beschichtet ist.

4. Elektrode (18) nach einem der Ansprüche 1 bis 3,
**dadurch gekennzeichnet,**
**dass** der Kollektorabschnitt (22) einen ersten Bereich (32) und einen zweiten Bereich (34) aufweist, wobei der erste Bereich (32) und der zweite Bereich (34) hinsichtlich deren elektrischer und/oder thermischer Leitfähigkeit unterschiedlich sind.

**5.** Elektrode (18) nach einem der Ansprüche 1 bis 4, **dadurch gekennzeichnet,** **dass** der Elektrodengrundkörper (20) mehrere Kontaktabschnitte (24) aufweist.

**6.** Elektrode (18) nach einem der Ansprüche 1 bis 5, **dadurch gekennzeichnet,** **dass** sich der Kontaktabschnitt (24) entlang der gesamten Breite des Kollektorabschnitts (22) erstreckt.

**7.** Sekundär-Batteriezelle (8), insbesondere Lithium-Ionen-Batteriezelle, mit einer Elektrode (18) nach einem der Ansprüche 1 bis 6.

**8.** Elektrisch angetriebenes Kraftfahrzeug (2) mit einer Traktionsbatterie (4), welche eine nach Anspruch 7 ausgebildete Sekundär-Batteriezelle (8) aufweist.

**Claims**

**1.** Electrode (18) for a secondary battery cell (8) having an, in particular foil-like, electrode main body (20),

- wherein the electrode main body (20) comprises a collector portion (22) as a current collector and a contact portion (24) for making electrical contact with a cell tab (ZA), and
- wherein the collector portion (22) and the contact portion (24) have different electrical conductivities and/or different thermal conductivities,
**characterized in that**
- the electrode main body (20) is formed from a metal foil, wherein the collector portion (22) and the contact portion (24) of the electrode main body (20) have different thicknesses ($d_{Kol}$, $d_{Kon}$), or
- the collector portion (22) is formed of a first material and the contact portion (24) is formed of a second material different to the first material.

**2.** Electrode (18) according to Claim 1, **characterized in that** the collector portion (22) is coated with active material.

**3.** Electrode (18) according to Claim 1 or 2, **characterized in that** the collector portion (22) is formed from a polymer film or a carbon foil, wherein the polymer film or the carbon foil is coated with a metal.

**4.** Electrode (18) according to one of Claims 1 to 3, **characterized in that** the collector portion (22) has a first region (32) and a second region (34), wherein the first region (32) and the second region (34) are different in terms of their electrical and/or thermal conductivity.

**5.** Electrode (18) according to one of Claims 1 to 4, **characterized in that** the electrode main body (20) has multiple contact portions (24).

**6.** Electrode (18) according to one of Claims 1 to 5, **characterized in that** the contact portion (24) extends along the entire width of the collector portion (22).

**7.** Secondary battery cell (8), in particular lithium-ion battery cell, having an electrode (18) according to one of Claims 1 to 6.

**8.** Electrically driven motor vehicle (2) having a traction battery (4) which has a secondary battery cell (8) designed according to Claim 7.

**Revendications**

**1.** Electrode (18) pour une cellule de batterie secondaire (8), comprenant un corps de base d'électrode (20), en particulier de type film,

- dans laquelle le corps de base d'électrode (20) présente une partie de collecteur (22) en tant que collecteur de courant, ainsi d'une partie de contact (24) pour la mise en contact électrique avec un conducteur de cellule (ZA), et
- dans laquelle la partie de collecteur (22) et la partie de contact (24) présentent des conductivités électriques différentes et/ou des conductivités thermiques différentes,
**caractérisée**
- **en ce que** le corps de base d'électrode (20) est formé à partir d'un film métallique, la partie de collecteur (22) et la partie de contact (24) du corps de base d'électrode (20) présentant des épaisseurs ($d_{Kol}$, $d_{Kon}$) différentes, ou
- **en ce que** la partie de collecteur (22) est formée à partir d'un premier matériau, et la partie de contact (24) est formée à partir d'un deuxième matériau différent du premier matériau.

**2.** Electrode (18) selon la revendication 1, **caractérisée** **en ce que** la partie de collecteur (22) est recouverte d'un matériau actif.

**3.** Electrode (18) selon la revendication 1 ou 2, **caractérisée** **en ce que** la partie de collecteur (22) est formée à partir d'un film polymère ou d'un film de carbone, le film polymère ou le film de carbone étant recouvert de métal.

4. Electrode (18) selon l'une quelconque des revendications 1 à 3, **caractérisée en ce que** la partie de collecteur (22) présente une première zone (32) et une deuxième zone (34), dans laquelle la première zone (32) et la deuxième zone (34) sont différentes quant à leur conductivité électrique et/ou thermique.

5. Electrode (18) selon l'une quelconque des revendications 1 à 4, **caractérisée en ce que** le corps de base d'électrode (20) présente plusieurs parties de contact (24).

6. Electrode (18) selon l'une quelconque des revendications 1 à 5, **caractérisée en ce que** la partie de contact (24) s'étend le long de toute la largeur de la partie de collecteur (22).

7. Cellule de batterie secondaire (8), en particulier cellule de batterie lithium-ion, comprenant une électrode (18) selon l'une quelconque des revendications 1 à 6.

8. Véhicule automobile électrique (2), comprenant une batterie de traction (4) qui présente une cellule de batterie secondaire (8) réalisée selon la revendication 7.

Fig. 1

18

24

26

H

B   D

**Fig. 2a**

$d_{Kon}$

20,24

26

20,22

18

H

B   D

$d_{Kol}$

**Fig. 2b**

$d_{Kon}$

20,24

26

20,22

18

H

B   D

$d_{Kol}$

**Fig. 2c**

18

20,24

30

20,22,28

H

B D

**Fig. 3a**

18

20,24

IIIc

20,22,32

30

H

B D

**Fig. 3b**

18

30

20,22,32

20,22,32

20,22,28,32

D

B    H

**Fig. 3c**

18

20,24

20,22

H

B    D

**Fig. 4**

EP 4 037 038 B1

20,24      20,24    36      20,24      20,24

18

H

L   D

20,22

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011177385 A1

- US 2019288352 A1